# EUROPEAN PATENT APPLICATION

(11) **EP 2 223 889 A2**
(43) Date of publication of application: **01.09.2010**
(21) Application number: 09012928.9
(22) Date of filing: 13.10.2009
(51) Int. Cl.: C01B 3/52, C01B 3/36

(54) **Device for converting solid or liquid fuels into a gaseous fuel**

(30) Priority: 25.02.2009 EP 09002622
(71) Applicant: Linde Aktiengesellschaft, 80331 München (DE)
(72) Inventor: Weiss, Horst, 81375 München (DE); Kerestecioglu, Ulvi, 82269 Geltendorf (DE); Kirchner, Lars, 82178 Puchheim (DE)

(57) **Abstract**

Integrated gasification combined cycle plants (IGCC) are an approach of using low quality coal for clean power generation at high efficiency. Downstream of the gasifier and the cooling train, a wash step is needed to extract sulphur and by-products from the gasification product (syngas). Due to the need for reducing CO₂-emissions, the IGCC technology can become even more attractive, if the syngas gets shifted to hydrogen and the CO₂ is taken out by an additional wash step. Currently there is still some potential for increasing the hydrogen content in the synthetic fuel gas, which is expected to be realised later by modifications of the turbines with limited efforts. For new projects the option of afterward CO₂-capture is important. The gas cleanup should either be capable of handling the high CO₂-load from the beginning or should be extendable to cope with CO₂-removal later on. The object of the present invention is a concept for a Rectisol® wash unit, extendable for future CO₂-removal based on a sulphur only removal operation with significant less equipment.

## Description

The present invention relates to a device for converting solid or liquid fuels into a gaseous fuel containing hydrogen and carbon monoxide, wherein the device comprises at least an air separation unit, a gasification unit, a heat recovery unit and a sulphur removal unit which is connected to a separator for degassing sulphur compounds.

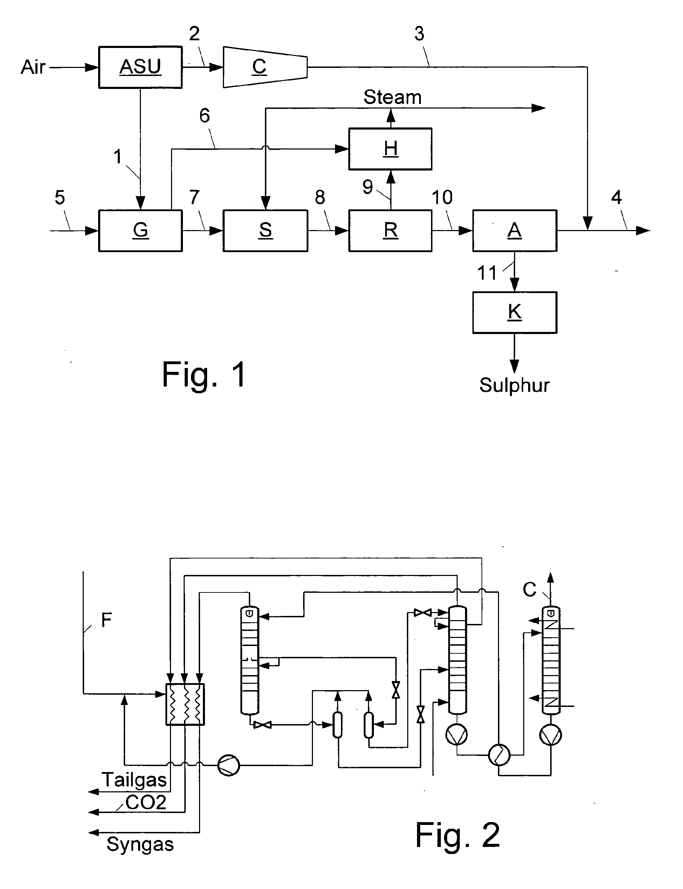

Such devices are used for the so called IGCC (Integrated Gasification Combined Cycle) process. IGCC is a power generation technology in which solid or liquid fuels are converted into a gaseous fuel consisting of hydrogen and carbon monoxide. The fuel gas is used in a combined cycle to produce power. **Figure 1** shows the elements of the gasification unit, which provides the gas to the power unit.

The essential steps of the IGCC process are described in the following:
**Air Separation:** The air separation unit ASU provides the oxygen 1 for the gasification unit G. Part of the produced nitrogen 2 is compressed C to provide a dilution media 3 for the hydrogen rich fuel gas 4. The nitrogen dilution is only required if the CO is shifted into hydrogen and CO₂ and the CO₂ is washed out for sequestration. The nitrogen then provides the required mass flow through the gas turbine of the power unit (not shown).
**Gasification:** Together with oxygen 1 coal, coke or a heavy liquid feed 5 is taken to the gasification unit G, where it is converted into a raw synthesis gas (syngas). This syngas consists of hydrogen and CO as products as well as by-products like CO₂, COS, H₂S, and methane and also trace components like iron carbonyles, nickel carbonyles, vanadium carbonyles, ammonia, mercury compounds, arsenic compounds or others, depending on the feedstock contaminations. The syngas, which typically has a pressure in the range between 40 and 60 bar, is cooled in the gasification unit G down to app. 280°C. The high pressure steam 6, generated during the cooling step, is taken to a superheater H and can be used in the steam turbine of the power unit (not shown).
CO-Shift: Depending on the capabilities of the gas turbine and the requirements regarding the CO₂ emissions, a CO-shift step is part of the process. If CO₂ emissions have to be minimized, the cooled syngas 7 is shifted within the CO-shift unit S and most of the CO is converted into hydrogen and CO₂.
**Heat Recovery:** As a preparation for cleaning the shifted gas 8, the gas temperature has to be reduced close to ambient temperature. This is achieved in the heat recovery unit R by producing steam 9, heating up boiler feed water and finally cooling the gas against air or cooling water. The knocked out water is recirculated into the gasification unit G or the CO-shift unit S.
**Sulphur and CO₂-Removal:** The main task of the wash system A depends on the features of the IGCC plant. If the plant may emit CO₂ without limitations, the main task is to remove the sulphur components from the shifted and cooled syngas 10 before it is sent to the gas turbine. In this scenario it is intended to have as much CO₂ in the syngas as possible to get a high mass flow into the gas turbine. The sulphur components are made available as a feed gas 11 for a Claus plant K. In case also CO₂ has to be removed from the syngas 10, the wash system A looks completely different. Converting the design from one option to the other is very costly, as a lot of equipment has to be replaced.

It is the object of the present invention to provide a device which allows reusing as much equipment as possible when the requirement of additional CO₂-removal comes up later.

The object is attained in that the separator for degassing sulphur compounds is prepared for an extension by an upper wash unit for CO₂-removal.

Further advantageous embodiments of the invention are defined in the depending claims.

In the following the features of the new approach for gas purification are described.

Objective of the approach is to save invest costs for an IGCC project which is prepared for carbon capture but is operated only with sulphur removal in the first phase of operation, which could imply a multiyear period of operation. Reasons for this split into two phases can be: Gas turbines are not available for hydrogen rich fuel operation, power production is needed earlier than sequestration capacities are available, local regulations allowing CO₂ emission until a fixed date etc. The invention provides a flexible solution which makes maximum use of the first phase investment but does not require capital and operational expenditures that don't give benefit in the first phase.

Due to its striking capabilities to remove not only sulphur and CO₂ but also all relevant trace components (carbonyles, HCN), the so called Rectisol^{®} wash is recommended as the preferred process.

Rectisol^{®} is a physical acid gas removal process using an organic solvent (typically methanol) at subzero temperatures. Rectisol^{®} can purify synthesis gas down to 0,1 vppm total sulphur (including COS) and CO₂ in ppm range.

The main advantages of the process are the rather low utility consumption figures, the use of a cheap and easily available solvent and the flexibility in process configuration.

A simplified flow scheme of a Rectisol^{®} process ready for CO₂ and sulphur removal from a syngas F is shown in Figure 2. CO₂ and sulphur compounds are removed in separate fractions, resulting in a pure CO₂ product CO₂ and an H₂S/COS enriched Claus gas fraction C.

Due to the physical nature of the process high pressure and high sour gas concentrations are particularly favourable. Rectisol^{®} is therefore frequently used to purify shifted, partially shifted or unshifted syngases downstream residue oil-, coal- or lignite gasification. The syngases from the gasification unit of an IGCC based power plant are similar in composition but the requirements regarding gas purity are not as high as normally required for chemical processes.

For the new approach in IGCC technology, it is proposed to realize the Rectisol^{®} wash unit in two steps. In the first step (case 1) the syngas can be desulphurized only and the Rectisol^{®} wash leaves a maximum CO₂ slip. In the second step (case 2) beside the sulphur components also CO₂ can be removed in the Rectisol^{®} wash unit from the syngas.

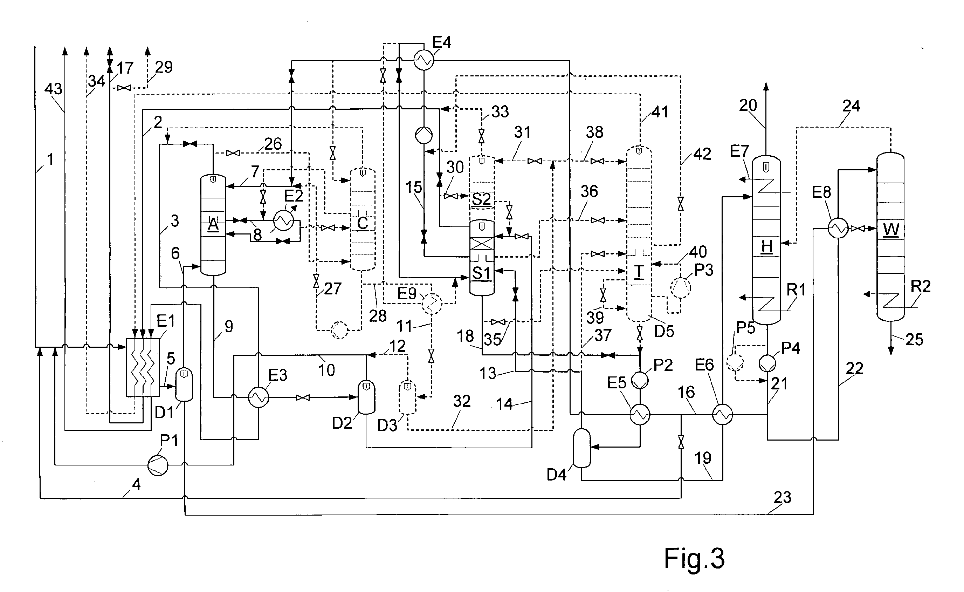

In the following the concept for an installation of a Rectisol^{®} wash unit in two steps is described in detail:
To turn the investment of case 1 into a sustainable one, all the installed equipment of case 1 should also be usable for case 2, so that only new equipment has to be added. As a consequence, the investment cost for the Rectisol^{®} unit for case 1 are significantly lower than for a full blown Rectisol^{®} unit recovering sulphur and CO₂. Based on budget estimation the difference is about 25%. Similarly, the operating cost will be lower than for a full blown plant, although some equipment has to be sized for case 2, to avoid parallel equipment. Nevertheless, the total amount of money spent after modifying the configuration for case 1 into a configuration for case 2 is higher than that required for a full blown Rectisol^{®} design from the very beginning.
To give a better understanding, the invention is explained in greater detail in the following on the exemplary embodiment depicted in **Figure 3****.**

Figure 3 shows a Rectisol^{®} unit in which CO₂ and/or sulphur components can be absorbed by methanol and removed from a carbon monoxide and/or hydrogen containing feed gas.

In Figure 3 all the required equipment for case 1 is drawn in solid lines and the equipment to be added for case 2 in dotted lines. All block valves required for the modification are shown, the ones open in case 1 and closed in case 2 are black and the ones open in case 2 and closed in case 1 are white. To allow a minimized downtime of the system when the operation is changed from case 1 to case 2, most of the valves have to be installed already in case 1.

The process steps are as follows:

### Case 1: Feed Gas Desulphurization Only

### 1. Feed Gas Precooling:

As the absorption takes place at temperatures below 0°C, the feed gas 1 is precooled against process streams 2 and 3 in feed gas cooler E1. To avoid freezing of contained water and forming of hydrates, cold methanol 4 is injected into the feed gas 1 and the resulting liquid methanol/water mixture 5 is knocked out after the cooling step in knockout drum D1. The spiral wound heat exchanger E1 is already equipped with the required passage for the CO₂ stream 41 of case 2. The precooled feed gas 6 is sent to absorber column A.

### 2. Removal of H₂S from the Feed Gas:

For case 1 only sulphur removal is required, which is done in absorber column A. The cooled feed gas 6 enters at the bottom of absorber column A and flows upward. In counter current flow methanol 7 comes from the top and dissolves the sulphur components as well as a small portion of CO₂. As absorption heat has to be removed, the partly loaded methanol 8 is cooled back against external refrigeration media in heat exchanger E2 and fed back into absorber column A. The sulphur loaded methanol 9 leaves column A at the bottom, while a purified gas stream 3 is withdrawn form the top. Gas stream 3 is warmed up against feed gas 1 in feed gas cooler E1 and send to the boundary limits as gas product 43, which can be used as fuel gas for a gas turbine (not shown).

### 3. Intermediate Methanol Expansion:

The sulphur-loaded solvent 9 from absorber column A is subcooled in heat exchanger E3 against the purified gas 3 leaving absorber column A and expanded into knockout drum D2 to an intermediate pressure of app. 10 bar(a) to recover co-absorbed hydrogen and carbon monoxide. To increase the overall recovery of the process, the hydrogen and carbon monoxide containing gas stream 10 is recompressed in the recycle compressor P1 and taken back into the feed gas 1. For case 2, also the CO₂-loaded methanol stream 11 is partly expanded and the resulting flash gas 12, leaving the top of the knockout drum D3, enters also recycle compressor P1. Depending on the total plant capacity, the recycle compressor P1 may have to be designed for the full capacity already for case 1.

### 4. Production of a Cold H₂S Fraction:

Together with the H₂S-containing gas 13, obtained in process step 5, the loaded methanol 14 is expanded into separator S1 close to ambient pressure for H₂S- (and co-absorbed CO₂-) recovery. The flashing is supported by warming-up the liquid phase 15 against lean methanol 16 in heat exchanger E4. From the top of separator S1 a CO₂-containing H₂S fraction 2 is withdrawn, which is warmed-up against feed gas 1 in feed gas cooler E1 and sent as feed 17 to a Claus unit (not shown) for sulphur recovery.

### 5. Hot Regeneration:

By use of pump P2 still loaded solvent 18 is withdrawn from the bottom of separator S1 and warmed-up in heat exchanger E5 against hot lean solvent 16, before it is expanded into knockout drum D4, where it is split up in a liquid phase 19 and a gas phase 13. Subsequently the liquid phase 19 it is heated up in heat exchanger E6 and fed into hot regeneration column H.

### 6. Production of a Warm H₂S Fraction:

The warm loaded solvent 19 enters hot regeneration column H at the top. Here, all remaining sulphur components are stripped off by means of methanol vapour, which is produced by the reboiler R1 at the bottom of column H. The reflux for column H is generated by a water cooled internal condenser E7.

The H₂S fraction 20, leaving hot regeneration column H overhead with ambient temperature, is sent directly to a Claus unit (not shown) for sulphur recovery.

Lean methanol 21, leaving hot regeneration column H at the bottom, is split up in two fractions 16, 22. The fraction 16 is cooled down in the methanol/methanol heat exchangers E6, E5 and E4 and pumped back to the methanol wash column A. A small portion 4 of the lean methanol 16 is injected into the feed gas stream 1 upstream feed gas cooler E1.

### 7. Methanol/Water Separation:

The condensate 23 from knockout drum D1, a mixture of methanol and water, is warmed-up against the lean methanol stream 22 in heat exchanger E8. Afterwards, both streams 22, 23 are fed into the methanol/water separation column W, where they are separated into methanol 24 and water 25. The methanol vapour 24 is led back into hot regeneration column H, while water 25 is disposed as wastewater. For the generation of stripping vapour, separation column W is equipped with a reboiler R2.

### In General

All equipment has to have enough capacity to be used unchanged also in case 2. This relates, besides equipment already indicated above, mainly for equipment described under 5. and 6.

### Case 2: Additionally Required Equipment for CO₂ Removal

### 11. Extension of Absorber Column A:

An absorber column C for the removal of CO₂ from gas stream 26 has to be added. The CO₂-loaded solvent 27 is pumped from the bottom of absorber column C to the top of absorber column A, where it is used as washing agent. Heat exchanger E2 is now being connected to absorber column C. This column is realised as separate equipment, standing adjacent to absorber column A.

### 12. Recycle:

The CO₂-loaded methanol 28 from absorber column C, not needed as washing agent in absorber column A, is subcooled in heat exchanger E9 and expanded into knockout drum D3 to the same intermediate pressure as the loaded methanol stream 9. The hydrogen containing flash gas 12 is taken to compressor P1 and recycled into the feed gas 1.

### 13. CO₂-Production:

A first CO₂-product 29 will be recovered at elevated pressure. For this purpose, separator S1 is used as well as a second separator S2. The CO₂-rich, sulphur containing gas stream 30, produced in separator S1, is expanded in to separator S2 for desulphurization. The sulphur components are washed back by means of a part 31 of the CO₂-loaded, but sulphur-free methanol fraction 32 from knockout drum D3. The degassing CO₂ contributes directly to the CO₂-stream 33, which is warmed-up against the feed gas in the feed gas cooler E1 and send to the boundary limits as CO₂-product 29.

### 14. H₂S-Enrichment

To generate a low pressure CO₂-product 34 methanol streams 35, 36 as well as the gas phase 37 from separator D4 are expanded into H₂S-erichment column T. The overhead gas is desulphurized in the upper section of column T by the other part 38 the CO₂-loaded, but sulphur-free methanol fraction 32. In order to increase the H₂S concentration in the H₂S-fraction 20 and also the flow rate of CO₂-product 34, the solvent 39 from the sump is further expanded into an integrated separator D5 in the lower part of column T. The resulting CO₂-flash gas 40 is recompressed into column T by use of compressor P3.

The CO₂-stream 41 is warmed up against the feed gas 1 in feed gas cooler E1 and send to the boundary limits as CO₂-product 34.

A methanol stream 42, rich in H₂S, is withdrawn from column T and, via mains 15 and 42, introduced into heat exchangers E4 and E9 for warming-up, before it is expanded into separator S1.

The remaining process steps (5-7) will be operated similar to case 1.

In order to save electric energy for operation in case 1, it is proposed to install a main solvent pump P4 with a capacity needed only for case 1 and to install a further pump P5 in parallel for the increased methanol flow of case 2.

A similar procedure is recommended for the external refrigeration plant (not shown): installation of a unit designed only for case 1; for the modification to case 2 a second identical refrigeration unit is required.

### Material Balances:

The data of tables 1, 2 and 3 result from a typical process gas from a GE gasification process, using a coal feed. For operation according to case 1 the CO₂ slip is approx. 70%. The process achieves guaranteed total sulphur content in the treated gas of 0.1 vppm maximum.

As described above, case 1 produces two sulphur containing acid gas fractions 17 und 20. One 20 of these fraction is highly concentrated in H₂S; the other 17 only low. These two fractions can be either mixed to one fraction to be fed to a sulphur recovery plant or further processed separately.

### Material Balance Case 1 (Table 1):

The feed gas to the system is unshifted as it comes from the gasifier. The high CO content in the feed is transferred into the clean gas, which is burnt in the gas turbines. The CO₂ within the feed gas is only partially taken out (70% CO₂ slip). As a result the gas turbine exhaust contains a high CO₂ load.

### Material Balance Case 2 (Table 2):

The feed gas to the system is now shifted down to approx 2.0 mol% CO content in a sour shift unit. The clean gas contains this CO and 5.8 mol% of CO₂ (CO₂ slip less than 10%). This finally ends up in the gas turbine exhaust as a very low CO₂ load.

### Utility Consumptions (Table 3):

Table 3 shows the consumption data for energy and materials in case 1 and case 2.

**Table 1**

| **Linde Engineering Division** | | | **Gasification** **MATERIAL BALANCE RECTISOL® WASH** **UNIT - Sulphur only** | | | | | | | |
|---|---|---|---|---|---|---|---|---|---|---|
| | **Feedgas** | | **Purified Gas** | | **H2S Fraction 2** | | **H2S Fraction 1** | | **Recycle Feed** | |
| | mole% | Nm3/hr | mole% | Nm3/hr | mole% | Nm3/hr | mole% Nm3/hr | | mole% | Nm3/hr |
| | | | | | | | | | | |
| H2 | 36,18 | 192.975,6 | 38,46 | 192.875,5 | 0,34 | 95,4 | 0,05 | 4,7 | 0,00 | 0,0 |
| N2 | 1,33 | 7.091,9 | 1,41 | 7.076,4 | 7,55 | 2.088,4 | 0,02 | 1,5 | 34,66 | 2.074,4 |
| CO | 44,06 | 234.994,0 | 46,66 | 233.984,0 | 3,59 | 993,7 | 0,18 | 16,3 | 0,00 | 0,0 |
| Ar | 0,85 | 4.532,4 | 0,90 | 4.507,8 | 0,09 | 24,3 | 0,00 | 0,4 | 0,00 | 0,0 |
| CH4 | 0,02 | 106,6 | 0,02 | 104,9 | 0,01 | 1,7 | 0,00 | 0,0 | 0,00 | 0,0 |
| CO2 | 16,69 | 88.995,9 | 12,52 | 62.796,5 | 84,70 | 23.430,2 | 69,48 | 6.333,0 | 59,54 | 3.563,8 |
| H2S | 0,670 | 3.572,6 | 0,0007 | 3,7 | 3,6515 | 1.010,1 | 30,13 | 2.746,5 | 3,13 | 187,6 |
| COS | 0,0009 | 4,8 | 0,0001 | 0,5 | 0,0063 | 1,8 | 0,03 | 2,6 | 0,00 | 0,0 |
| MeOH | 0,00 | 0,0 | 0,0200 | 100,4 | 0,06 | 17,2 | 0,11 | 10,1 | 0,00 | 0,0 |
| H2OO | 0,21 | 1.107,2 | 0,00 | 0,0 | 0,00 | 0,0 | 0,00 | 0,0 | 2,67 | 160,0 |
| | | | | | | | | | | |
| Total | 100,00 | 533.381,2 | 100,00 | 501.449,7 | 100,00 | 27.662,8 | 100,00 | 9.115, | 100,00 | 5.985,8 |
| | | | | | | | | | | |
| P[bar] | 55,0 | | 52,9 | | 1,3 | | 2,0 | | 2,5 | |
| T[°C] | 38,0 | | 28,0 | | 28,0 | | 34,2 | | 38 | |

**Table 2**

| **Linde Engineering Division** | | | **Gasification** **MATERIAL BALANCE RECTISOL® WASH** **UNIT - including CO2 removal** | | | | | | | |
|---|---|---|---|---|---|---|---|---|---|---|
| | **Feedgas** | | **Purified Gas** | | **H2S Fraction** | | **CO2 Product** | | **Recycle Feed** | |
| | mole% | Nm3/hr | mole% | Nm3/hr | mole% | Nm3/hr | mole% | Nm3/hr | mole% | Nm3/hr |
| | | | | | | | | | | |
| H2 | 54.79 | 413,244.9 | 88.55 | 412,683.7 | 0.16 | 11.9 | 0.74 | 2,111.5 | 31.37 | 1,562.3 |
| N2 | 0.94 | 7,088.5 | 1.51 | 7,033.9 | 0.01 | 0.4 | 0.03 | 85.6 | 0.63 | 31.4 |
| CO | 1.98 | 14,931.1 | 3.16 | 14,711.8 | 0.02 | 1.3 | 0.08 | 218.0 | 0.00 | 0.0 |
| Ar | 0.60 | 4,524.6 | 0.95 | 4,444.9 | 0.01 | 0.5 | 0.04 | 110.3 | 0.63 | 31.2 |
| CH4 | 0.01 | 75.4 | 0.02 | 71.4 | 0.00 | 0.0 | 0.00 | 4.0 | 0.00 | 0.0 |
| CO2 | 41.00 | 309,255.0 | 5.80 | 27,029.7 | 47.56 | 3,465.7 | 99.10 | 281,813.1 | 61.31 | 3,053.5 |
| H2S | 0.48 | 3,619.7 | | 0.4 | 52.13 | 3,799.2 | <100ppmv | 9.3 | 3.80 | 189.2 |
| COS | 0.0002 | 1.2 | <15ppmv | 0.0 | 0.02 | 1.2 | | 0.0 | 0.00 | 0.0 |
| CH3OH | | | 0.01 | 54.3 | 0.10 | 7.3 | 0.01 | 32.3 | 0.00 | 0.0 |
| H2O | 0.21 | 1,556.2 | | | | | | | 2.26 | 112.6 |
| | | | | | | | | | | |
| Total | 100.00 | 754,296.5 | 100.00 | 466,030.2 | 100.00 | 7,287.3 | 100.00 | 284,384.2 | 100.00 | 4,980.1 |
| | | | | | | | | | | |
| P[bar] | 54.71 | | 52.71 | | 2.10 | | | | 3.00 | |
| T[°C] | 38.0 | | 29.0 | | 31.8 | | | | 38.0 | |

**Table 3**

| | | **Case 1** | **Case 2** |
|---|---|---|---|
| Refrigeration at -40°C (thermal) | MW | 9.0 | 17.25 |
| LP Steam (5 bara, sat) | t/h | 7.3 | 22.0 |
| MP Steam (10 bara, sat) | t/h | 9.3 | 13.8 |
| Electric energy Pumps | kW | 2175 | 4095 |
| Electric energy Compressor | kW | 850 | 2305 |
| Cooling Water 30°C => 40°C | m³/h | 330 | 750 |
| Methanol losses | kg/h | 245 | 190 |

## Claims

1. Device for converting solid or liquid fuels into a gaseous fuel containing hydrogen and carbon monoxide, wherein the device comprises at least an air separation unit, a gasification unit, a heat recovery unit and a sulphur removal unit which is connected to a separator for degassing sulphur compounds, **characterised in that** the separator for degassing sulphur compounds is prepared for an extension by an upper wash unit for CO₂ removal.

2. Device according to claim 1, **characterised in that** the sulphur removal unit is prepared for an additional connection to a CO₂ absorption column, to be inserted between the sulphur removal unit and the separator for degassing sulphur compounds.

3. Device according to either claim 1 or 2, **characterised in that** the separator for degassing sulphur compounds is prepared for an additional connection to a H₂S enrichment unit to be added.

4. Device according to any one of claims 1 to 3, **characterised in that** the sulphur removal unit is arranged as an absorption column for a physical acid gas removal process using an organic solvent.

5. Device according to any one of claims 1 to 4, **characterised in that** the upper wash unit, to be added to the separator for degassing sulphur compounds, is arranged as an absorption column for a physical acid gas removal process using an organic solvent.

6. Device according to any one of claims 2 to 4, **characterised in that** the CO₂ absorption column, to be inserted between the sulphur removal unit and the separator for degassing sulphur compounds, is arranged as an absorption column for a physical acid gas removal process using an organic solvent.
